# EUROPEAN PATENT APPLICATION

(11) **EP 4 851 423 A1**
(43) Date of publication of application: **09.12.2026**
(21) Application number: 26178446.6
(22) Date of filing: 13.05.2026
(51) Int. Cl.: F01D 5/10, F01K 23/10, F01K 23/16, F16D 48/06

(54) **METHOD, SYSTEM AND POWER PLANT FOR ACHIEVING TARGET RELATIVE ANGLE BETWEEN TWO ROTATING SHAFTS TO BE COUPLED**

(30) Priority: 06.06.2025 US 202519230292
(71) Applicant: GE Vernova Technology GmbH, 5400 Baden (CH)
(72) Inventor: BLOCK, Frederick William, Greenville, 29615 (US)
(74) Representative: Rüger Abel IP Legal Solutions GmbH

(57) **Abstract**

Target relative angle between two, to-be-coupled rotating shafts (106, 124) includes iteratively performing a process that includes calculating an expected relative angle change of the two rotating shafts as one rotating shaft accelerates to match the other rotating shaft's speed. An expected relative angle is calculated based on a current relative angle and the expected relative angle change. A needed relative angle adjustment (RAA) is calculated as a difference between the target and expected relative angles and a needed relative angle change is calculated as a difference between the needed RAA and the expected relative angle change. A needed acceleration rate change for the first rotating shaft to generate the needed relative angle change is calculated, and applied to acceleration rate of the one rotating shaft to achieve the target relative angle between the two rotating shafts when coupled by a coupler (140) at matching speeds.

## Description

### TECHNICAL FIELD

The disclosure relates generally to rotational systems and, more particularly, to achieving a target relative angle between a first rotating shaft to be coupled to a second rotating shaft by a coupler.

### BACKGROUND

Power plants include rotatable components that need to be coupled together. For example, a combined cycle power plant (CCPP) may include a gas turbine (GT) system having a rotating shaft that must be coupled to a rotating shaft of a steam turbine (ST) system. The two rotating shafts are coupled together using a mechanical coupler to operate as a single rotating shaft. In a typical operation, the GT system is made operational and coupled to the electric grid via a generator (e.g., at 60 Hertz), and then the ST system is made operational. Once the rotating shaft of the ST system reaches the rotating speed of the GT system, the mechanical coupler couples the two rotating shafts together to make the two rotating shafts operate as a single rotating shaft.

The coupler, which is typically some form of mechanical clutch, is ideally controlled to connect the two rotating shafts at a target relative angle that minimizes vibrations. More particularly, the two rotating shafts are coupled at a target relative angle that reduces or eliminates the inherent imbalance in the two rotating shafts that can cause vibrations. Achieving the target relative angle is challenging due to, for example, the high rotational speeds of the two rotating shafts, e.g., 50-60 Hertz, and the need to control the acceleration of the rotating shaft of the steam turbine to match the rotating speed of the gas turbine. Coupling the rotating shafts together at whatever random relative angle they achieve when the steam turbine's rotating shaft matches the rotating speed of the gas turbine's rotating shaft is unacceptable because of the inherent imbalance in the coupled shafts and the inevitable vibrations caused thereby. One approach, known as the "hold-and-go" approach, brings the steam turbine's rotating shaft to a steady rotating speed, i.e., a hold speed with no acceleration, prior to reaching the target relative angle. Then, the steam turbine rotating shaft is accelerated to the target relative angle. This approach suffers from a number of drawbacks. For example, this approach requires knowledge of the steam turbine's start angle, which is extremely difficult to measure within an acceptable tolerance, especially at higher rotational speeds (i.e., due to an inadequate Nyquist sampling frequency). Further, decelerating the steam turbine rotating shaft to zero creates mechanical issues, such as sub-synchronous bearing vibrations caused by oil sloshing in the bearings for the steam turbine's rotating shaft.

### BRIEF DESCRIPTION

All aspects, examples and features mentioned below can be combined in any technically possible way.

An aspect of the disclosure provides a method for achieving a target relative angle between a first rotating shaft to be coupled to a second rotating shaft by a coupler, the method comprising: iteratively performing the following: calculating an expected relative angle change of the first rotating shaft and the second rotating shaft based on a current acceleration rate of the first rotating shaft and a difference between a current rotating speed of the first rotating shaft and a rotating speed of the second rotating shaft; calculating an expected relative angle based on a current relative angle and the expected relative angle change; calculating a needed relative angle adjustment as a difference between the target relative angle and the expected relative angle; calculating a needed relative angle change as a difference between the needed relative angle adjustment and the expected relative angle change; calculating a needed acceleration rate change for the first rotating shaft to generate the needed relative angle change; and changing the current acceleration rate of the first rotating shaft by the needed acceleration rate change to achieve the target relative angle between the first rotating shaft and the second rotating shaft when coupled by the coupler.

Another aspect of the disclosure includes any of the preceding aspects, and calculating the expected relative angle change of the first rotating shaft and the second rotating shaft is based on the current acceleration rate, the current rotating speed of the first rotating shaft and the rotating speed of the second rotating shaft.

Another aspect of the disclosure includes any of the preceding aspects, and calculating the expected relative angle includes summing the current relative angle and the expected relative angle change.

Another aspect of the disclosure includes any of the preceding aspects, and calculating the needed acceleration rate change for the first rotating shaft to generate the needed relative angle change is based on a previous acceleration rate, a difference between the rotating speed of the first rotating shaft and the rotating speed of the second rotating shaft, and the needed relative angle change.

Another aspect of the disclosure includes any of the preceding aspects, and the iteration occurs once every cycle time of a speed control loop for the first rotating shaft.

Another aspect of the disclosure includes any of the preceding aspects, and the first rotating shaft is part of a steam turbine system, and the second rotating shaft is part of a gas turbine system.

Another aspect of the disclosure includes any of the preceding aspects and further comprising coupling the first rotating shaft and the second rotating shaft using the coupler in response to a rotating speed of the first rotating shaft equaling the rotating speed of the second rotating shaft.

An aspect of the disclosure includes a system for achieving a target relative angle between a first rotating shaft to be coupled to a second rotating shaft by a coupler, the system comprising: a memory; and a controller coupled to the memory and configured to process events therein by iteratively performing the following: calculating an expected relative angle change of the first rotating shaft and the second rotating shaft based on a current acceleration rate of the first rotating shaft and a difference between a current rotating speed of the first rotating shaft and a rotating speed of the second rotating shaft; calculating an expected relative angle based on a current relative angle and the expected relative angle change; calculating a needed relative angle adjustment as a difference between the target relative angle and the expected relative angle; calculating a needed relative angle change as a difference between the needed relative angle adjustment and the expected relative angle change; calculating a needed acceleration rate change for the first rotating shaft to generate the needed relative angle change; and changing the current acceleration rate of the first rotating shaft by the needed acceleration rate change to achieve the target relative angle between the first rotating shaft and the second rotating shaft when coupled by the coupler.

Another aspect of the disclosure includes any of the preceding aspects, and calculating the expected relative angle change of the first rotating shaft and the second rotating shaft is based on the current acceleration rate, the current rotating speed of the first rotating shaft and the rotating speed of the second rotating shaft.

Another aspect of the disclosure includes any of the preceding aspects, and calculating the expected relative angle includes summing the current relative angle and the expected relative angle change.

Another aspect of the disclosure includes any of the preceding aspects, and calculating the needed acceleration rate change for the first rotating shaft to generate the needed relative angle change is based on a previous acceleration rate, a difference between the rotating speed of the first rotating shaft and the rotating speed of the second rotating shaft, and the needed relative angle change.

Another aspect of the disclosure includes any of the preceding aspects, and the iteration occurs once every cycle time of a speed control loop for the first rotating shaft.

Another aspect of the disclosure includes any of the preceding aspects, and the controller further controls the coupler to couple the first rotating shaft and the second rotating shaft using the coupler in response to a rotating speed of the first rotating shaft equaling the rotating speed of the second rotating shaft.

Another aspect of the disclosure includes any of the preceding aspects, and the first rotating shaft is part of a steam turbine system, and the second rotating shaft is part of a gas turbine system.

An aspect of the disclosure includes a power plant, comprising: a steam turbine system including a first rotating shaft; a gas turbine system including a second rotating shaft; a coupler for coupling the first rotating shaft to the second rotating shaft; a sensor for measuring a current relative angle of the first rotating shaft and the second rotating shaft; an accelerator system for accelerating rotation of the first rotating shaft at a current acceleration rate to a current rotating speed less than a rotating speed of the second rotating shaft; a controller configured to achieve a target relative angle between the first rotating shaft to be coupled to the second rotating shaft by the coupler by iteratively performing the following: calculating an expected relative angle change of the first rotating shaft and the second rotating shaft based on the current acceleration rate of the first rotating shaft and a difference between the current rotating speed of the first rotating shaft and the rotating speed of the second rotating shaft; calculating an expected relative angle based on a current relative angle and the expected relative angle change; calculating a needed relative angle adjustment as a difference between the target relative angle and the expected relative angle; calculating a needed relative angle change as a difference between the needed relative angle adjustment and the expected relative angle change; calculating a needed acceleration rate change for the first rotating shaft to generate the needed relative angle change; and changing the current acceleration rate of the first rotating shaft by the needed acceleration rate change to achieve the target relative angle between the first rotating shaft and the second rotating shaft when coupled by the coupler.

Another aspect of the disclosure includes any of the preceding aspects, and calculating the expected relative angle change of the first rotating shaft and the second rotating shaft is based on the current acceleration rate, the current rotating speed of the first rotating shaft and the rotating speed of the second rotating shaft.

Another aspect of the disclosure includes any of the preceding aspects, and calculating the expected relative angle includes summing the current relative angle and the expected relative angle change.

Another aspect of the disclosure includes any of the preceding aspects, and calculating the needed acceleration rate change for the first rotating shaft to generate the needed relative angle change is based on a previous acceleration rate, a difference between the rotating speed of the first rotating shaft and the rotating speed of the second rotating shaft, and the needed relative angle change.

Another aspect of the disclosure includes any of the preceding aspects, and the iteration occurs once every cycle time of a speed control loop for the first rotating shaft.

Another aspect of the disclosure includes any of the preceding aspects, and the controller further controls the coupler to couple the first rotating shaft and the second rotating shaft using the coupler in response to a rotating speed of the first rotating shaft equaling the rotating speed of the second rotating shaft.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic view of an illustrative power plant in the form of a combined cycle power plant, according to embodiments of the disclosure;
FIG. 2 shows a schematic perspective view of ends of two rotating shafts to be coupled together, according to embodiments of the disclosure;
FIG. 3 shows a schematic view of ends of two rotating shafts to be coupled together, according to embodiments of the disclosure;
FIG. 4 shows a schematic view of ends of two rotating shafts to be coupled together with a target relative angle that requires acceleration to meet, according to embodiments of the disclosure;
FIG. 5 shows a schematic view of ends of two rotating shafts to be coupled together with a target relative angle that requires deceleration to meet, according to embodiments of the disclosure;
FIG. 6 shows a schematic block diagram of a controller, according to embodiments of the disclosure;
FIG. 7 shows a flow diagram of a method for achieving a target relative angle between a first rotating shaft to be coupled to a second rotating shaft by a coupler, according to embodiments of the disclosure;
FIG. 8 shows a graphical representation of one example of achieving a target relative angle between a first rotating shaft to be coupled to a second rotating shaft by a coupler, according to embodiments of the disclosure; and
FIG. 9 shows a graphical representation of another example of achieving a target relative angle between a first rotating shaft to be coupled to a second rotating shaft by a coupler, according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current disclosure, it will become necessary to select certain terminology when referring to and describing relevant machine components within an illustrative application of a combined cycle power plant. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

It is often required to describe parts that are at different radial positions with regard to a center axis. The term "axial" refers to movement or position parallel to an axis, e.g., an axis of a turbomachine. The term "radial" refers to movement or position perpendicular to an axis, e.g., an axis of a turbomachine. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. Finally, the term "circumferential" refers to movement or position around an axis, e.g., a circumferential interior surface of a casing extending about an axis of a turbomachine. As indicated above, it will be appreciated that such terms may be applied in relation to the axis of the turbomachine.

In addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs or the feature is present and instances where the event does not occur or the feature is not present.

Where an element or layer is referred to as being "on," "engaged to," "connected to," "coupled to," or "mounted to" another element or layer, it may be directly on, engaged, connected, coupled, or mounted to the other element or layer, or intervening elements or layers may be present. In contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

Embodiments of the disclosure include methods and systems for achieving a target relative angle between two, to-be-coupled rotating shafts, and a power plant including such a system. The process includes iteratively performing a number of steps to adjust an acceleration rate of one of the rotating shafts to more accurately achieve the target relative angle. The process includes calculating an expected relative angle change of the two rotating shafts as one rotating shaft accelerates to match the other rotating shaft's speed. An expected relative angle is calculated based on a current relative angle and the expected relative angle change. A needed relative angle adjustment is calculated as a difference between the target relative angle and the expected relative angle, and a needed relative angle change is calculated as a difference between the needed relative angle adjustment and the expected relative angle change. A needed acceleration rate change for the first rotating shaft to generate the needed relative angle change is calculated and applied to the current acceleration rate of the one rotating shaft to achieve the target relative angle between the two rotating shafts when their matching speeds allows them to be coupled by a coupler. Embodiments of the disclosure accurately achieve the target relative angle between two rotating shafts without requiring stopping the acceleration/deceleration of the one rotating shaft. The teachings of the disclosure also avoid the sampling frequency issues of other approaches.

Embodiments of the disclosure will be described in the setting of a power plant in which a rotating shaft of a steam turbine system will be brought up to speed and coupled to an already rotating shaft of a gas turbine system. However, it is emphasized and will be apparent to those with skill in the art that the teachings of the disclosure are applicable to the coupling of any two rotating shafts regardless of application.

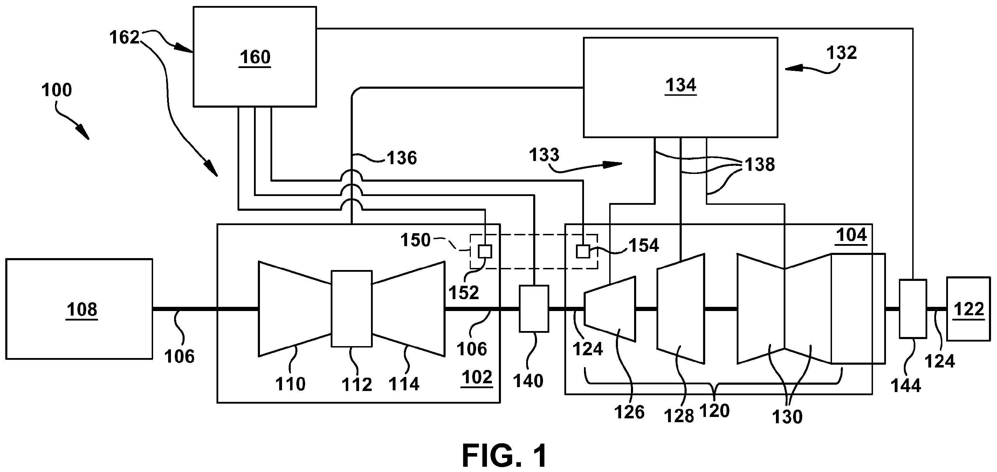

Turning to FIG. 1, a schematic view of portions of an illustrative power plant 100, and more particularly, a combined cycle power plant, are shown. Power plant 100 is one example of a system in which two rotating shafts are coupled together at a desired relative angle to reduce or eliminate vibrations therein once coupled together. Again, the teachings of the disclosure may be employed with power plant 100 or any other system in which two rotating shafts are coupled together at speed by a coupler, such as a mechanical clutch.

Power plant 100 may include a gas turbine system 102 and a steam turbine system 104. Gas turbine system 102 may include a GT rotating shaft 106, also known as a rotor, coupled to a first generator 108, which generates electrical energy. Hence, GT rotating shaft 106 is part of gas turbine system 102. Gas turbine system 102 (hereafter "GT system 102") may include a compressor 110 and a combustor 112. GT system 102 also includes gas turbine 114 coupled to common compressor/turbine GT rotating shaft 106. GT system 102 may be, for example, any model commercially available from GE Vernova, Cambridge, MA, USA. In operation, air enters the inlet of compressor 110, is compressed and then discharged to combustor 112 where fuel such as a gas, e.g., natural gas, or a fluid, e.g., oil, is burned to provide high energy combustion gases which drive gas turbine 114. In gas turbine 114, the energy of the hot gases is converted into work, some of which is used to drive compressor 110 through (second) rotating shaft 106, with the remainder available for useful work to drive a load such as first generator 108 via rotating shaft 106 of GT system 102 for producing electricity. Hereafter, (second) rotating shaft 106 of GT system 102 will be referred to as "GT rotating shaft 106" for brevity.

Steam turbine system 104 includes a steam turbine 120 that is, perhaps, operably coupled to GT system 102 and/or another generator 122 through a (first) rotating shaft 124, also known as a rotor. Steam turbine system 104 (hereafter "ST system 104") may include one or more steam turbine segments, e.g., as shown, a high pressure (HP) segment 126, an intermediate pressure (IP) segment 128 and a low pressure (LP) segment 130. Each segment 126, 128, 130 includes a plurality of rotating blades (not shown) mechanically coupled to rotating shaft 124 of ST system 104, which rotates rotating shaft 124 based on the steam flow thereover. ST system 104 may be, for example, any model commercially available from GE Vernova, Cambridge, MA, USA. Power plant 100 may also include a steam source 132, which may include a heat recovery steam generator (HRSG) 134 or other steam source operably connected to GT system 102 and ST system 104. As understood, exhaust 136 from GT system 102 is used by HRSG 134 to create steam flow(s) 138 for use by ST system 104. HRSG 134 may include a conventional HRSG configuration, such as those used in conventional combined cycle power systems, and/or may be embodied as another type of heat exchanger or similar component for using exhaust energy to produce steam. For example, HRSG 134 may include a thermally conductive pipe, line, etc., with water therein such that water in HRSG 134 is heated by exhaust 136 to produce steam flow(s) 138. HRSG 134 may be fluidly connected to both GT system 102 and ST system 104 via conventional piping (numbering omitted), described further herein.

In operation, steam from steam source 132 (e.g., HRSG 134 and perhaps other sources) is directed through steam flow pipes and enters an inlet of HP segment 126, IP segment 128 and/or LP segment 130. Steam is channeled therein to impart a force on blades thereof causing (first) steam turbine (ST) rotating shaft 124 to rotate. Rotating shaft 124 is part of steam turbine system 104. Hereafter, (first) rotating shaft 124 of ST system 104 will be referred to as "ST rotating shaft 124" for brevity. As understood, steam from an upstream turbine may be employed later in a downstream turbine. In operation, steam 138 thus produced by steam source 132 drives at least a part of ST system 104 in which work is extracted to drive ST rotating shaft 124 and, perhaps, an additional load such as second generator 122 which, in turn, produces additional electric power.

It is understood that generators 108, 122, GT rotating shaft 106 and ST rotating shaft 124 may be of any size or type known in the art and may differ depending upon their application or the system to which they are connected.

GT system 102, ST system 104, HRSG 134 and other parts of power plant 100, as will be described herein, may be controlled by one or more controller(s) 160.

Power plant 100 also includes a coupler 140 to couple GT rotating shaft 106 and ST rotating shaft 124 together at speed. Coupler 140 may include any now known or later developed mechanical clutch capable of coupling large rotating shafts typically used in turbine systems 102, 104. As the types and forms of coupler 140 are well known in the art, no further details are warranted for an understanding of the disclosure. As will be described herein, coupler 140 is controlled by controller(s) 160.

Power plant 100 may also include an accelerator system 144 for rotating ST rotating shaft 124 during startup of ST system 104 and as part of the teachings of the disclosure. As noted, GT system 102 is started first, and then ST system 104 is started. As part of the startup of ST system 104, in addition to steam 138 being directed to turbine segments 126, 128, 130, ST rotating shaft 124 is rotated to bring its rotational speed (N_{ST}) up to the same rotational speed (N_{GT}) as GT system 102. ST rotating shaft 124 is accelerated until rotating shafts 106, 124 are at the same rotational speed and have a target relative angle that diminishes vibration of the coupled shafts 106, 124, at which point coupler 140 couples rotating shafts 106, 124 together. As will be described further herein, accelerator system 144 may accelerate ST rotating shaft 124 at a current acceleration rate (R_{ST0}) to a current rotating speed (N_{ST0}) less than a rotating speed (N_{GT}) of GT rotating shaft 106 using accelerator system 144. However, accelerator system 144 may be adjusted to accelerate ST rotating shaft 124 at other acceleration rate(s) R_{STn} according to teachings of the disclosure. It will be understood that "acceleration" and/or "acceleration rate," as used herein, may mean a positive acceleration or positive acceleration rate, or a negative acceleration or negative acceleration rate, i.e., deceleration. Accelerator system 144 may include any now known or later developed motorized system for rotating ST rotating shaft 124 typically used in turbine systems 102, 104. As the types and forms of accelerator systems 144 are well known in the art, no further details are warranted for an understanding of the disclosure. As will be described herein, accelerator system 144 is controlled by controller(s) 160.

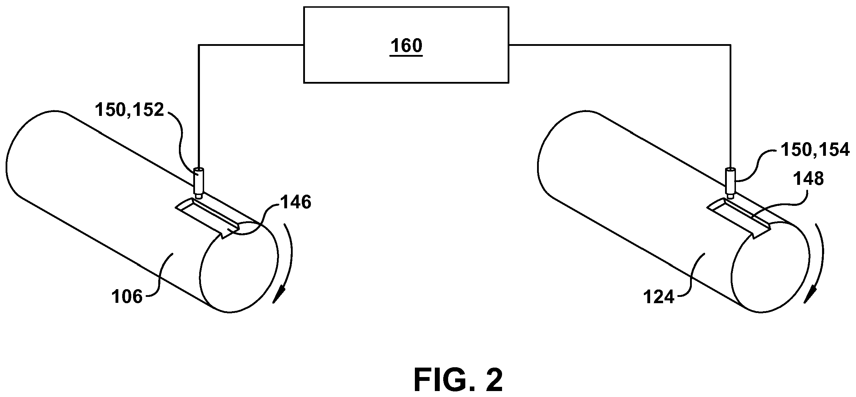

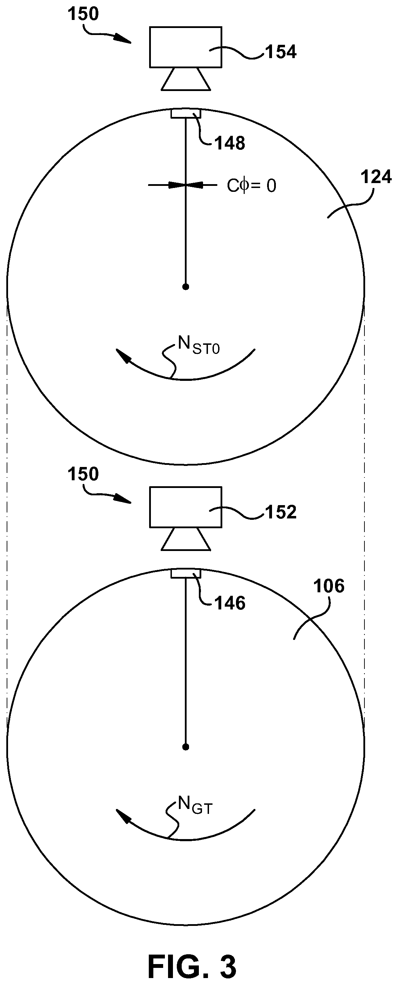

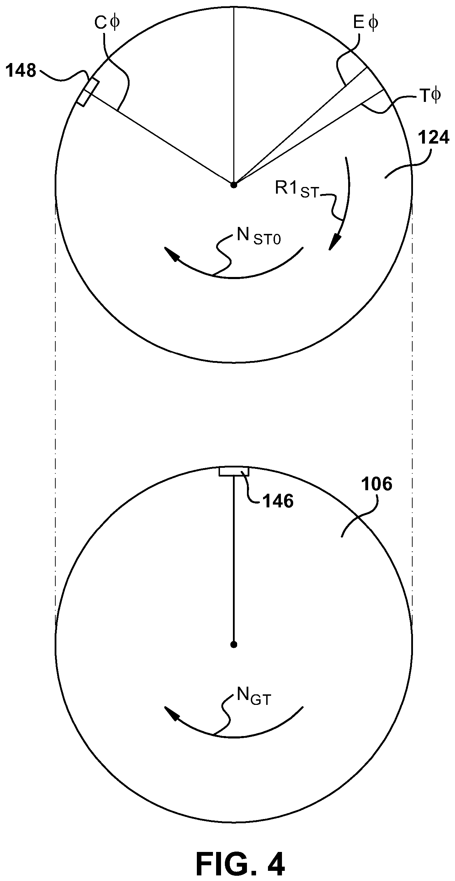

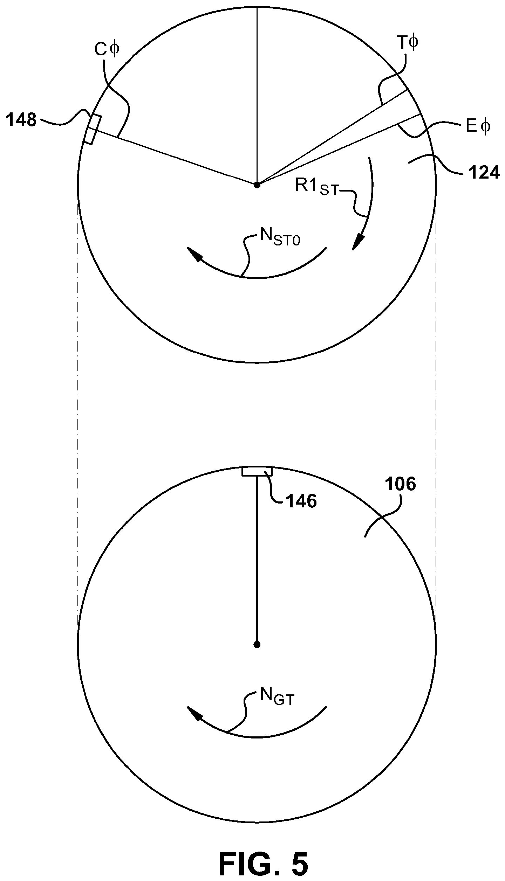

FIG. 2 shows a schematic perspective view of ends of two rotating shafts 106, 124 to be coupled together, and FIG. 3 shows a schematic view of ends of two rotating shafts 106, 124 to be coupled together. Also, FIGS. 4 and 5 show schematic views of ends of two rotating shafts 106, 124 at other than a target relative angle TΦ, according to embodiments of the disclosure. FIGS. 3-5 show rotation of rotating shafts 106, 124 in a counterclockwise direction, but the disclosure can also be applied to clockwise rotation. As understood in the field, rotating shafts 106, 124 each include a key indicator 146, 148 (also known as a 'key phasor'), respectively, that are used to identify a set location on each rotating shaft 106, 124 for purposes of, among other things, measuring rotational speed and relative angle. **In** the example shown in FIG. 2, key indicators 146, 148 on rotating shafts 106, 124, respectively, are located at 12 o'clock thereon; however, this set location may vary so long as it is consistent between rotating shafts 106, 124. As shown in FIGS. 1-3, power plant 100 also includes a sensor 150 for measuring, among other things, a current relative angle CΦ of ST rotating shaft 124 and GT rotating shaft 106. Sensor 150 may include a first sensor unit 152 for GT rotating shaft 106 and a second sensor unit 154 for ST rotating shaft 124. Each of first and second sensors units 152, 154 may include any now known or later developed transducer device for identifying key indicators 146, 148 on respective rotating shafts 106, 124 as they pass during rotation thereof. In non-limiting example, sensor units 152, 154 may include laser, infrared, etc., motion sensors. As the types and forms of sensor units 152, 154 are well known in the art, no further details are warranted for an understanding of the disclosure. Sensor 150, i.e., sensor units 152, 154 thereof, is operably coupled to controller(s) 160.

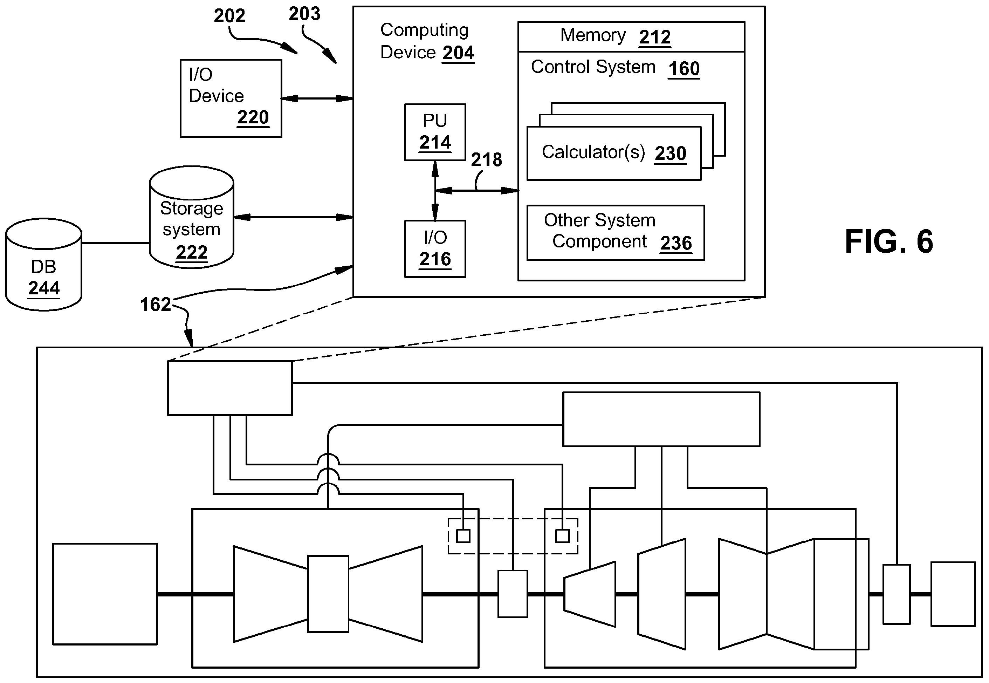

Embodiments of the disclosure include a system 162 (FIGS. 1, 6) for achieving target relative angle TΦ (FIGS. 4-5) between first ST rotating shaft 124 to be coupled to (second) GT rotating shaft 106 by coupler 140. As shown in FIG. 6, system 162 includes a memory, and controller(s) 160 coupled to the memory and configured to process events therein according to a method, described herein. Power plant 100 includes, among other things, system 162 including controller(s) 160. While controller(s) 160 is shown as a single unit, it will be recognized that parts thereof and/or functions thereof may be distributed in different locations. For example, an entirety or parts of controller(s) 160 may be located within an overall power plant 100 controller (not shown), a GT system 102 controller and/or an ST system 104 controller. In one non-limiting example, sensor 150, including sensor unit 152 and sensor unit 154, may communicate with part of an ST system 104 controller, while the functions of controller(s) 160 are part of an overall power plant controller (not shown).

As used herein, "relative angle," also known as "differential angle," is a difference in the rotational positions of two rotating shafts 106, 124 relative to respective fixed locations thereof, e.g., where their key indicators 146, 148 are located. A target relative angle TΦ is used to ensure the two rotating shafts 106, 124, when coupled together, are balanced and have minimal vibrations. More particularly, with further regard to FIGS. 3-5, the drawings show GT rotating shaft 106 rotating at a rotational speed N_{GT} and ST rotating shaft 124 rotating at an initial rotational speed N_{St0} less than rotational speed N_{GT} of GT system 102 (FIG. 1).

For reference purposes, FIG. 3 shows rotating shafts 106, 124 at a zero relative angle, meaning the two rotating shafts 106, 124 are at the same rotational location relative to one another and some fixed external point (not shown). For reference purposes, in FIGS. 3-5, relative angles will be described herein with the assumption of a reference origin at 12 o'clock, e.g., based on key indicator 146 of GT rotating shaft 106 being rotationally located at 12 o'clock. It will be recognized that the relative angle can be calculated regardless of where key indicator 146 or key indicator 148 are rotationally located at any given time. If the two rotating shafts 106, 124 were coupled at the zero relative angle shown in FIG. 3, they would be out of balance and would likely vibrate in an inadmissible manner for safe operation of power plant 100 (FIG. 1) with the combined rotating shafts.

In order for rotating shafts 106, 124 to be coupled together in a manner in which they will not vibrate, as shown in FIGS. 4 and 5, they must be coupled together at target relative angle TΦ that avoids and/or minimizes any imbalance between the two rotating shafts 106, 124. The target relative angle TΦ may be identified using any now known or later developed rotating element evaluation and/or modeling system (not shown). A rotating element evaluation and/or modeling system would consider, among other factors, the balancing of each rotating shaft, rotational speed(s), loads on each rotating shaft, to determine a target relative angle TΦ that avoids and/or minimizes any imbalance between the two rotating shafts 106, 124. Since the operation of such rotating element evaluation and/or modeling system are well known in the field, no further details are warranted.

For purposes of description, a target relative angle TΦ of +45° will be used (shown between 10 o'clock and 11 o'clock in FIGS. 4 and 5). It will be recognized that a positive degree shift, e.g., +15°, means a shift in the direction of rotation, i.e., clockwise as shown, and a negative degree shift, e.g., -15°, means a shift counter to the direction of rotation, i.e., counterclockwise as shown. In the example shown in FIG. 4, GT rotating shaft 106 is rotating at rotational speed N_{GT}, e.g., 60 Hertz (Hz). Also, ST rotating shaft 124 is rotating at initial rotational speed N_{ST0}, e.g., 59.76 Hz, which is less than rotational speed N_{GT} of GT rotating shaft 106 but is accelerating at a current (initial) acceleration rate R1_{ST0}, e.g., 0.1 Hertz/second (Hz/s). A current relative angle CΦ is shown on ST rotating shaft 124 (FIGS. 4 and 5). As will be described further herein, current relative angle CΦ can be measured by sensor 150 in a known fashion. In FIG. 4, a current relative angle CΦ is shown as -55°. In the example shown in FIG. 4, as will be described herein, an expected relative angle EΦ (based on current relative angle CΦ and expected relative angle change DΦₙ) is greater than target relative angle TΦ (i.e., +45°). Accordingly, with the stated parameters for the FIG. 4 situation, ST rotating shaft 124 must continue to increase the acceleration rate to achieve target relative angle TΦ.

In the example shown in FIG. 5, GT rotating shaft 106 is rotating at rotational speed N_{GT}, e.g., 60 Hertz (Hz). Also, ST rotating shaft 124 is rotating at initial rotational speed N_{ST0}, e.g., 59.76 Hz, which is less than rotational speed N_{GT} of GT rotating shaft 106 but is accelerating at a current (initial) acceleration rate R1_{ST0}, e.g., 0.1 Hertz/second (Hz/s). A current relative angle CΦ is shown as -52.28° in FIG. 5. For the example shown in FIG. 5, as will be described herein, expected relative angle EΦ (based on current relative angle CΦ and expected relative angle change DΦₙ) is less than target relative angle TΦ (i.e., +45°). Accordingly, with the stated parameters, ST rotating shaft 124 must continue to decrease the acceleration rate to achieve target relative angle TΦ.

The present disclosure is described below with reference to flowchart illustrations and/or block diagrams of methods, systems and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine (e.g., controller 160), such that the instructions, which execute via the processor of the computer or other programmable data processing apparatus, create means for implementing the functions/acts specified in the flowchart and/or block diagram block or blocks. These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks. The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

FIG. 6 shows an illustrative environment 202 for one or more controller(s) 160. To this extent, environment 202 includes a computer infrastructure 203 that can perform the various process steps described herein. In particular, computer infrastructure 203 is shown including a computing device 204 that comprises controller(s) 160. Computing device 204 is shown including a memory 212, a processor (PU) 214, an input/output (I/O) interface 216, and a bus 218. Further, computing device 204 is shown in communication with an external I/O device/resource 220 and a storage system 222. As is known in the art, in general, processor 214 executes computer program code, such as controller(s) 160, that is stored in memory 212 and/or storage system 222. While executing computer program code, processor 214 can read and/or write data, such as operational data, to/from memory 212, storage system 222, and/or I/O interface 216. Bus 218 provides a communications link between each of the components in computing device 204. I/O interface 216 can comprise any device that enables a user to interact with computing device 204 or any device that enables computing device 204 to communicate with one or more other computing devices. Input/output devices (including but not limited to keyboards, displays, pointing devices, AR system 206, etc.) can be coupled to the system either directly or through intervening I/O controllers.

In any event, computing device 204 can comprise any general-purpose computing article of manufacture capable of executing computer program code installed by a user (e.g., a personal computer, server, handheld device, etc.). However, it is understood that computing device 204, including controller(s) 160, are only representative of various possible equivalent computing devices that may perform the various process steps of the disclosure. To this extent, in other embodiments, computing device 204 can comprise any specific purpose computing article of manufacture comprising hardware and/or computer program code for performing specific functions, any computing article of manufacture that comprises a combination of specific purpose and general-purpose hardware/software, or the like. In each case, the program code and hardware can be created using standard programming and engineering techniques, respectively.

Similarly, computer infrastructure 203 is only illustrative of various types of computer infrastructures for implementing the disclosure. For example, in one embodiment, computer infrastructure 203 comprises two or more computing devices (e.g., a server cluster) that communicate over any type of wired and/or wireless communications link, such as a network, a shared memory, or the like, to perform the various process steps of the disclosure. When the communications link comprises a network, the network can comprise any combination of one or more types of networks (e.g., the Internet, a wide area network, a local area network, a virtual private network, etc.). Network adapters may also be coupled to the system to enable the data processing system to become coupled to other data processing systems or remote printers or storage devices through intervening private or public networks. Modems, cable modem and Ethernet cards are just a few of the currently available types of network adapters. Regardless, communications between the computing devices may utilize any combination of various types of transmission techniques.

As previously mentioned, and discussed further below, controller(s) 160 enables computing infrastructure 203 to achieve target relative angle TΦ between GT rotating shaft 106 to be coupled to ST rotating shaft 124 by coupler 140. To this extent, controller(s) 160 is shown including one or more calculator(s) 230 configured to calculate the various parameters described herein. Controller(s) 160 may also include other system components 236 capable of operating parts of power plant 100 other than as expressly described herein. Other system components 236 may include any now known or later developed power plant controller components capable of operating power plant 100. Operation of each of these systems is discussed further below, where relevant to the teachings of the disclosure. It is understood that some of the various systems shown in FIG. 6 can be implemented independently, combined, and/or stored in memory for one or more separate computing devices that are included in computer infrastructure 203. Further, it is understood that some of the systems and/or functionality may not be implemented, or additional systems and/or functionality may be included as part of environment 202.

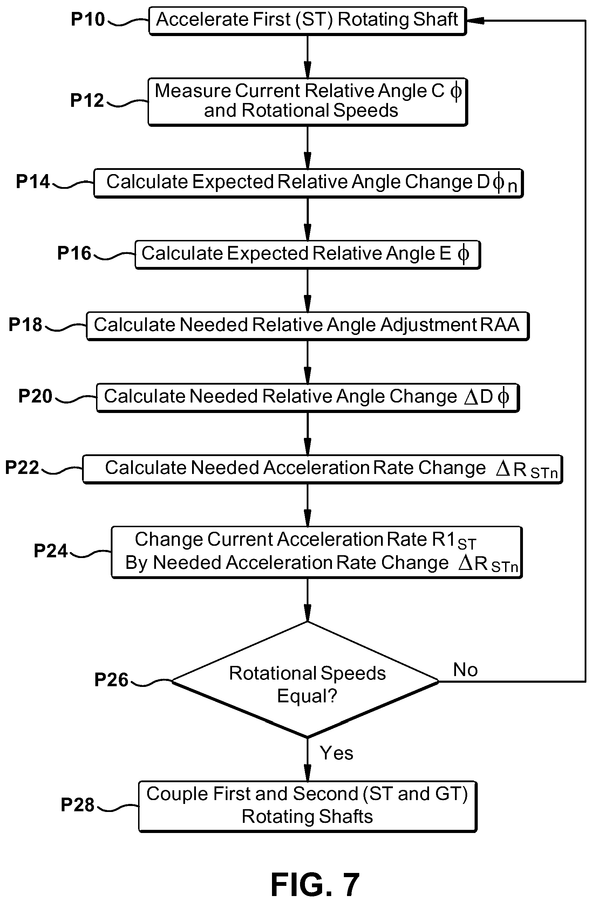

With reference to FIGS. 4-7, a computer-implemented method of achieving target relative angle TΦ will now be described. FIG. 7 shows a flow diagram for describing the computer-implemented method of achieving target relative angle TΦ using system 162 (FIG. 1) within the illustrative application of power plant 100 (FIG. 1). As will be described, controller 160 is configured to achieve target relative angle TΦ between ST rotating shaft 124 to be coupled to GT rotating shaft 106 by coupler 140 by iteratively performing the process. The process iterates to continually correct acceleration of ST rotating shaft 124 to ensure target relative angle TΦ is achieved when the rotating speeds of ST rotating shaft 124 and GT rotating shaft 106 match, so coupling can occur at target relative angle TΦ. The subscript "n" is used in various parameters of the disclosure to indicate a particular iteration of the method. Similarly, the subscript "0" is used in various parameter to indicate an initial iteration.

The method described herein may initiate at any time before rotating speed N_{ST} of ST rotating shaft 124 is still below rotating speed N_{GT} of GT rotating shaft 106. Prior to initiation of the method, in process P10, (first) ST rotating element 124 may be accelerated by accelerator system 144 in any now known or later developed manner, e.g., at any acceleration rate(s) typically used during startup of ST system 104 (FIG. 4). In one non-limiting example, the method according to embodiments of the disclosure may initiate when rotating speed N_{ST} of ST rotating element 124 is within a given threshold, e.g., 2 Hertz, of rotating speed N_{GT} of GT rotating shaft 106 and more care is required to not over-accelerate rotating speed N_{ST} of ST rotating shaft 124 past rotating speed N_{GT} of GT rotating shaft 106.

In process P10, controller(s) 160 controls accelerator system 144 to accelerate rotation of ST rotating shaft 124 at a current acceleration rate R1_{STn} (of a particular iteration of the iterative method) to a current rotating speed N_{STn} (of a particular iteration of the iterative method) less than a rotating speed N_{GT} of GT rotating shaft 106. On a first, initial iteration, the initial acceleration rate is referenced as R1_{ST0} and the initial rotating speed is referenced N_{ST0}. For subsequent iterations of the method, the current acceleration rate is referenced as R1_{STn} and the current rotating speed is referenced N_{STn}. However, rotating speed N_{GT} of GT rotating shaft 106 is steady during the method, e.g., at 50 Hz or 60Hz (hence, N_{GT} does not include an iteration number). As will be further described, accelerator system 144 may be adjusted to accelerate ST rotating shaft 124 at other acceleration rate(s) according to teachings of the disclosure. As noted, "acceleration" and/or "acceleration rate," as used herein, may mean positive acceleration or positive acceleration rate, or negative acceleration or negative acceleration rate, i.e., deceleration. First current acceleration rate R1_{ST0} may be any rate desired to gradually bring a first current rotating speed N_{ST0} closer to the steady-state rotating speed N_{GT} of GT rotating shaft 106. In contrast to the "hold-and-go" approaches, the acceleration of ST rotating element 124 is never stopped to avoid afore-mentioned mechanical issues, e.g., oil sloshing in the bearings of ST rotating shaft 124, which can produce sub-synchronous bearing vibrations.

In process P12, controller(s) 160 controls sensor 150 (FIGS. 1-3) to measure a current relative angle CΦ of ST rotating shaft 124 and GT rotating shaft 106. More particularly, controller(s) 160 and sensor 150, using sensor unit 152 and sensor unit 154, identify the location of key indicators 146, 148 on each rotating shaft 124, 106 and calculate current relative angle CΦ of ST rotating shaft 124 and GT rotating shaft 106. The calculation can be carried out using any now known or later developed methodology. Since the technology to make such a calculation is well known, no further details are warranted for an understanding by those with skill in the art. Sensor units 152, 154 may also measure rotating speed N_{ST} of ST rotating shaft 124 and rotating speed N_{GT} of GT rotating shaft 106 in any now known or later developed fashion.

In process P14, controller(s) 160 (calculator(s) 230 thereof) calculates an expected relative angle change DΦₙ of ST rotating shaft 124 and GT rotating shaft 106 based on a current acceleration rate R1_{STn} of ST rotating shaft 124 and a difference between a current rotating speed N_{STn} of ST rotating shaft 124 and rotating speed N_{GT} of GT rotating shaft 106. That is, calculating expected relative angle change DΦₙ of ST rotating shaft 124 and GT rotating shaft 106 is based on current acceleration rate R1_{STn}, current rotating speed N_{STn} of ST rotating shaft 124 and rotational speed N_{GT} of GT rotating shaft 106. The difference between current rotating speed N_{STn} of ST rotating shaft 124 and rotating speed N_{GT} of GT rotating shaft 106 is referred to as "slip." The current acceleration rate R1_{STn} may be known from a setting of accelerator system 144, or may be measured by sensor 150, i.e., using sensor unit 154. Expected relative angle change DΦₙ indicates how much and in what direction the relative angle will change before the rotating speeds are the same based on current acceleration rate R1_{STn} of ST rotating shaft 124 and the slip, i.e., difference between current rotating speed N_{STn} of ST rotating shaft 124 and rotating speed N_{GT} of GT rotating shaft 106. Expected relative angle change D1Φ may be calculated using the following equation:$D {Φ}_{n} = {1 / 2 R 1}_{STn} ( {\left({N}_{GT}{- N}_{STn}{/ R 1}_{ST}\right)}^{2} - ( ( {\left({N}_{GT}{- N}_{ST}\right)}^{2} / {R}_{STn}$ (1)
where DΦₙ = expected relative angle change in, e.g., degrees, for iteration n;
R1_{STn} = current acceleration rate of ST rotating shaft 124 in, e.g., Hz/s, for iteration n;
N_{GT} = rotating speed of GT rotating shaft 106 in, e.g., Hz;
N_{STn} = current rotating speed of ST rotating shaft 124 in, e.g., Hz, for iteration n;
and N_{GT}-N_{STn} = the slip in, e.g., Hz, for iteration n; and
n = indicates the iteration of the method, e.g., initial or current values.

In process P16, controller(s) 160 (calculator(s) 230 thereof) calculate an expected relative angle EΦ based on current relative angle CΦ and expected relative angle change DΦₙ. Expected relative angle EΦ may be calculated by summing current relative angle CΦ and expected relative angle change DΦₙ. Hence, expected relative angle EΦ represents where the relative angle is anticipated to be when the rotating speeds of rotating shafts 106, 124 are the same.

In process P18, controller(s) 160 calculates a needed relative angle adjustment RAA as a difference between target relative angle TΦ and expected relative angle EΦ. The needed relative angle adjustment RAA indicates how much the relative angle would be off from target relative angle TΦ if the current expected or anticipated relative angle EΦ was reached, i.e., if no changes were made to the current acceleration rate R1_{STn}.

In process P20, controller(s) 160 (calculator(s) 230 thereof) calculate a needed relative angle change ΔDΦ as a difference between needed relative angle adjustment RAA and expected relative angle change DΦₙ of ST rotating shaft 124 and GT rotating shaft 106. The needed relative angle change ΔDΦ indicates how much the anticipated change in the relative angle must be adjusted to achieve target relative angle TΦ from where it would be if no changes were made to the current acceleration rate R1_{STn}.

In process P22, controller(s) 160 (calculator(s) 230 thereof) calculate a needed acceleration rate change ΔR_{STn} for ST rotating shaft 124 to generate needed relative angle change ΔDΦₙ. Needed acceleration rate change ΔR_{STn} indicates how much the current acceleration rate R1_{STn} must change in order to achieve target relative angle TΦ when rotating speed N_{STn} of ST rotating shaft 124 matches rotating speed N_{GT} of GT rotating shaft 106 and the shafts can be coupled. The needed acceleration rate change ΔR_{STn} for ST rotating shaft 124 to generate the needed relative angle change ΔDΦₙ is based on a previous acceleration rate R1_{STn-1}, the slip (i.e., the difference between rotating speed N_{STn} of ST rotating shaft 124 and rotating speed N_{GT} of GT rotating shaft 106; N_{GT}-N_{STn}), and the needed relative angle change ΔDΦₙ. Needed acceleration rate change ΔR_{STn} can be calculated according to the following equation:${\left[1/Δ{R}_{STn}\right]}^{-1} = {[ 1 / R}_{STn} + \left(ΔD{Φ}_{n}/360\right) / 0.5 {\left(\left({N}_{GT}{- N}_{STn}\right)\right)}^{2} {]}^{-1}$ (2) ⁻¹
where ΔR_{STn} = needed acceleration rate change of ST rotating shaft 124 in, e.g., Hz/s, for iteration n;
ΔDΦₙ = needed relative angle change (converted from degrees to Hertz by dividing by 360);
N_{GT} = rotating speed of GT rotating shaft 106 in, e.g., Hz;
N_{STn} = current rotating speed of ST rotating shaft 124 in, e.g., Hz, for iteration n;
and N_{GT}-N_{STn} = the slip in, e.g., Hz, for iteration n; and
n = indicates the iteration of the method, e.g., initial or current values.

In process P24, controller(s) 160 controls accelerator system 144 to change current acceleration rate R1_{STn} (of the previous iteration of the method) of ST rotating shaft 124 by the needed acceleration rate change ΔR_{STn} to achieve target relative angle TΦ between ST rotating shaft 124 and GT rotating shaft 106 when coupled by coupler 140.

In process P26, controller(s) 160 determines whether current rotating speed N_{STn} of ST rotating shaft 124 matches (equals) that of rotating speed N_{GT} of GT rotating shaft 106. If NO at process P26, as shown by the arrow returning to process P10, the method iterates as many times as necessary. The iteration may occur very rapidly. For example, the iteration may occur, for example, once every cycle time of a speed control loop for (first) ST rotating shaft 124, e.g., 40 milliseconds or any appropriate cycle time. Consequently, the responsiveness of system 162 to achieve target relative angle TΦ may be very quick.

In process P28, in response to rotating speed N_{STn} of ST rotating shaft 124 equaling that of rotating speed N_{GT} of GT rotating shaft 106, i.e., YES at process P26, controller(s) 160 directs coupler 140 to couple ST rotating shaft 124 and GT rotating shaft 106, i.e., using coupler 140. This process occurs in any now known or later developed fashion, depending on the type of coupler 140 used. The method then ends, and GT rotating shaft 106 and ST rotating shaft 124 rotate together as a single shaft at target relative angle TΦ.

With further regard to FIGS. 4 and 5, examples of the method will now be described.

### EXAMPLE 1:

For purposes of the example in FIG. 4, we assume current relative angle CΦ is measured at -55° (process P12) which is less than target relative angle TΦ of +45°; initial or current rotational speed N_{STn} of ST rotating shaft 124 is measured at 59.76 Hz (process P12); rotational speed N_{GT} of GT rotating shaft 106 is measured 60 Hz (process P12), resulting in a slip (N_{GT}-N_{STn}) of 0.24 Hz; and current acceleration rate R1_{STn} of ST rotational shaft 124 is at 0.1 Hz/s. Under this illustrative configuration, as will be further described, ST rotating shaft 124 must increase its acceleration rate as it rotates in the clockwise direction to achieve target relative angle TΦ.

Per process P14, expected relative angle change DΦₙ is calculated to be 103.68°, i.e., per equation (1): DΦₙ = ½(0.1) ((0.24/0.1)² - (((0.24)²/ 0.1)).

Per process P16, expected relative angle EΦ is calculated to be 48.68°, i.e., sum current relative angle CΦ and expected relative angle change DΦₙ: -55+103.68 = 48.68°.

Per process P18, needed relative angle adjustment RAA is calculated to be -3.68°, i.e., difference between target relative angle TΦ and expected relative angle EΦ: 45°-48.68° = -3.68°.

Per process P20, needed relative angle change ΔDΦ is calculated to be 100.0°, i.e., difference between needed relative angle adjustment RAA and expected relative angle change DΦₙ of ST rotating shaft 124 and GT rotating shaft 106: 103.68°-3.68° = 100.0°.

Per process P22, needed acceleration rate change ΔR_{STn} for ST rotating shaft 124 to generate needed relative angle change ΔDΦₙ is calculated to be 0.1037 Hz/s, i.e., [1/ΔR_{STn}]⁻¹= [1/0.1 + (-3.68/360)/1/2 (0.24)²]⁻¹.

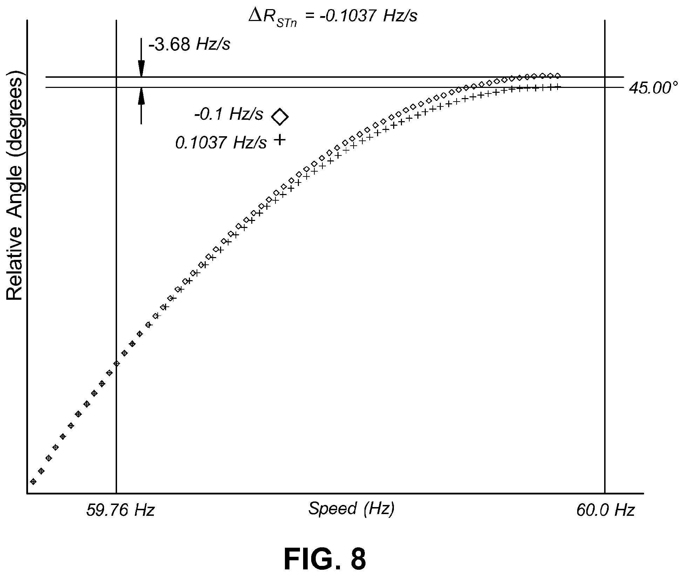

FIG. 8 shows a graphical representation of maintaining a current acceleration rate change R_{ST} (line with diamond data points) and iteratively changing acceleration rate change R_{ST} (line with "+" data points) according to embodiments of the disclosure. As would be expected for the FIG. 4 example, the current acceleration rate R1_{STn} for ST rotating shaft 124 is accelerated to have ST rotating shaft 124 turn slightly faster to achieve target relative angle TΦ of 45° when ST rotating shaft 124 achieves rotational speed N_{ST} that equals rotational speed N_{GT} of GT rotating shaft 106 at 60 Hz. However, rotational speed N_{STn} of ST rotating shaft 124 continues to gradually approach rotational speed N_{GT} of GT rotating shaft 106 and never stops accelerating. With each iteration, the acceleration rate R_{STn} for ST rotating shaft 124 is continually corrected to ensure target relative angle TΦ is achieved when rotational speed N_{STn} of ST rotating shaft 124 equals rotational speed N_{GT} of GT rotating shaft 106. In contrast, if the acceleration rate is left at 0.1 Hz/s, the target relative angle TΦ would be short by -3.68°.

### EXAMPLE 2:

For purposes of the example in FIG. 5, we assume current relative angle CΦ is measured at - 52.28° (process P12) which is less than target relative angle TΦ of +45°; initial or current rotational speed N_{STn} of ST rotating shaft 124 is measured at 59.76 Hz (process P12); rotational speed N_{GT} of GT rotating shaft 106 is measured 60 Hz (process P12), resulting in a slip (N_{GT}-N_{STn}) of 0.24 Hz; and current acceleration rate R1_{STn} of ST rotational shaft 124 is at 0.1 Hz/s. Under this illustrative configuration, ST rotating shaft 124 must decrease its acceleration rate as it rotates in the clockwise direction to achieve target relative angle TΦ.

Per process P14, expected relative angle change DΦₙ is calculated to be 103.68°, i.e., per equation (1): DΦₙ = ½(0.1) ((0.24/-0.1)² - (((0.24)²/0.1)).

Per process P16, expected relative angle EΦ is calculated to be 41.4°, i.e., sum current relative angle CΦ and expected relative angle change DΦₙ: -52.28+103.68 = 41.4°.

Per process P18, needed relative angle adjustment RAA is calculated to be -3.68°, i.e., difference between target relative angle TΦ and expected relative angle EΦ: 45°-41.4° = 3.6°.

Per process P20, needed relative angle change ΔDΦ is calculated to be 107.28°, i.e., difference between needed relative angle adjustment RAA and expected relative angle change DΦₙ of ST rotating shaft 124 and GT rotating shaft 106: 103.68°+3.6° = 107.28°.

Per process P22, needed acceleration rate change ΔR_{STn} for ST rotating shaft 124 to generate needed relative angle change ΔDΦₙ is calculated to be -0.0966Hz/s, i.e., [1/ΔR_{STn}]⁻¹= [1/0.1 + (3.6/360)/1/2 (0.24)²]⁻¹.

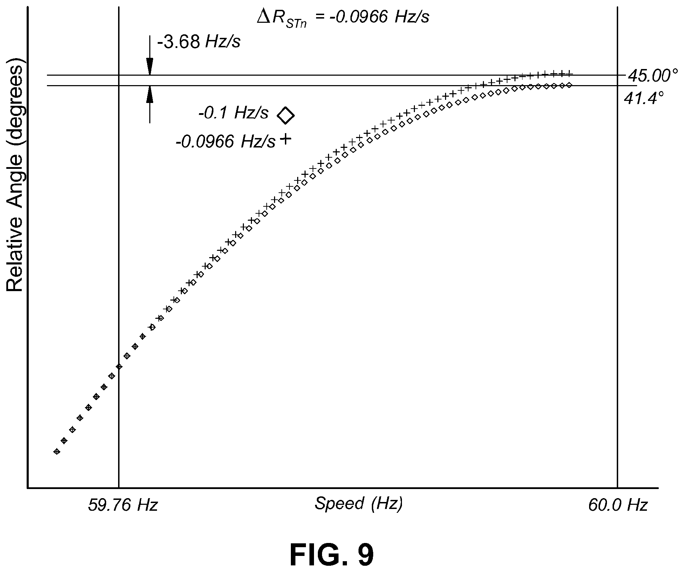

FIG. 9 shows a graphical representation of maintaining a current acceleration rate change R_{ST} (line with diamond data points) and iteratively changing acceleration rate change R_{ST} (line with "+" data points) according to embodiments of the disclosure. As would be expected for the FIG. 5 example, the acceleration rate R_{STn} for ST rotating shaft 124 is slightly decelerated to have ST rotating shaft 124 turn slightly slower to achieve target relative angle TΦ. However, rotational speed N_{STn} of ST rotating shaft 124 continues to gradually approach the rotational speed N_{GT} of GT rotating shaft 106, and the acceleration never stops. With each iteration, the acceleration rate R_{STn} for ST rotating shaft 124 is continually corrected to ensure target relative angle TΦ is achieved when rotational speed N_{STn} of ST rotating shaft 124 equals rotational speed N_{GT} of GT rotating shaft 106. In contrast, if the acceleration rate is left at 0.1 Hz/s, the target relative angle TΦ would be overshot by +3.6°.

Embodiments of the disclosure provide various technical and commercial advantages, examples of which are discussed herein. Embodiments of the disclosure accurately achieve the target relative angle between two rotating shafts without requiring stopping the acceleration/deceleration of the one rotating shaft. The teachings of the disclosure also avoid the sampling frequency issues of other approaches.

As will be appreciated by one skilled in the art, controller(s) 160 according to the present disclosure may be embodied as hardware and/or software. Further, controller(s) 160 according to the present disclosure may be embodied as a system, method or computer program product. Accordingly, the present disclosure may take the form of an entirely hardware embodiment, an entirely software embodiment (including firmware, resident software, micro-code, etc.) or an embodiment combining software and hardware aspects that may all generally be referred to herein as a "system." Furthermore, the present disclosure may take the form of a computer program product embodied in any tangible medium of expression having computer-usable program code embodied in the medium.

Any combination of one or more computers, usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, a magnetic storage device, or a solid state storage device. Note that the computer-usable or computer-readable medium could be another suitable medium upon which the program is printed, as the program can be electronically captured, via, for instance, optical scanning of a paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present disclosure may be written in any combination of one or more programming languages, such as Java, Javascript, Python, HTML/CSS, Typescript, Smalltalk, C#, C/C++, Perl or the like. The program code may execute entirely, partly, as a stand-alone software package, on any controller (s) 160 that are operatively coupled to parts of power plant 100, may execute or partly or entirely on a remote computer or entirely on the remote computer or server that is operatively coupled to controller(s) 160 of power plant 100. In the latter scenario, the remote computer may be connected to controller(s) 160 through any type of network, including a local area network (LAN) or a wide area network (WAN), or the connection may be made to an external computer (for example, through the Internet using an Internet Service Provider).

The flowchart and block diagrams in the drawings illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiments were chosen and described in order to best explain the principles of the disclosure and the practical application of the technology and to enable others of ordinary skill in the art to understand the disclosure for contemplating various modifications to the present embodiments, which may be suited to the particular use contemplated.

## Claims

1. A method for achieving a target relative angle between a first rotating shaft to be coupled to a second rotating shaft by a coupler, the method comprising:
iteratively performing the following:
calculating an expected relative angle change of the first rotating shaft and the second rotating shaft based on a current acceleration rate of the first rotating shaft and a difference between a current rotating speed of the first rotating shaft and a rotating speed of the second rotating shaft;
calculating an expected relative angle based on a current relative angle and the expected relative angle change;
calculating a needed relative angle adjustment as a difference between the target relative angle and the expected relative angle;
calculating a needed relative angle change as a difference between the needed relative angle adjustment and the expected relative angle change;
calculating a needed acceleration rate change for the first rotating shaft to generate the needed relative angle change; and
changing the current acceleration rate of the first rotating shaft by the needed acceleration rate change to achieve the target relative angle between the first rotating shaft and the second rotating shaft when coupled by the coupler.

2. The method of claim 1, wherein calculating the expected relative angle change of the first rotating shaft and the second rotating shaft is based on the current acceleration rate, the current rotating speed of the first rotating shaft and the rotating speed of the second rotating shaft.

3. The method of claim 1 or 2, wherein calculating the expected relative angle includes summing the current relative angle and the expected relative angle change.

4. The method of anyone of the preceding claims, wherein calculating the needed acceleration rate change for the first rotating shaft to generate the needed relative angle change is based on a previous acceleration rate, a difference between the rotating speed of the first rotating shaft and the rotating speed of the second rotating shaft, and the needed relative angle change.

5. The method of anyone of the preceding claims, wherein the iteration occurs once every cycle time of a speed control loop for the first rotating shaft.

6. The method of anyone of the preceding claims, wherein the first rotating shaft is part of a steam turbine system, and the second rotating shaft is part of a gas turbine system.

7. The method of anyone of the preceding claims, further comprising coupling the first rotating shaft and the second rotating shaft using the coupler in response to a rotating speed of the first rotating shaft equaling the rotating speed of the second rotating shaft.

8. A system for achieving a target relative angle between a first rotating shaft to be coupled to a second rotating shaft by a coupler, the system comprising:
a memory; and
a controller coupled to the memory and configured to process events therein by iteratively performing the following:
calculating an expected relative angle change of the first rotating shaft and the second rotating shaft based on a current acceleration rate of the first rotating shaft and a difference between a current rotating speed of the first rotating shaft and a rotating speed of the second rotating shaft;
calculating an expected relative angle based on a current relative angle and the expected relative angle change;
calculating a needed relative angle adjustment as a difference between the target relative angle and the expected relative angle;
calculating a needed relative angle change as a difference between the needed relative angle adjustment and the expected relative angle change;
calculating a needed acceleration rate change for the first rotating shaft to generate the needed relative angle change; and
changing the current acceleration rate of the first rotating shaft by the needed acceleration rate change to achieve the target relative angle between the first rotating shaft and the second rotating shaft when coupled by the coupler.

9. The system of claim 8, wherein calculating the expected relative angle change of the first rotating shaft and the second rotating shaft is based on the current acceleration rate, the current rotating speed of the first rotating shaft and the rotating speed of the second rotating shaft.

10. The system of claim 8 or 9, wherein calculating the expected relative angle includes summing the current relative angle and the expected relative angle change.

11. The system of anyone of the claims 8-10, wherein calculating the needed acceleration rate change for the first rotating shaft to generate the needed relative angle change is based on a previous acceleration rate, a difference between the rotating speed of the first rotating shaft and the rotating speed of the second rotating shaft, and the needed relative angle change.

12. The system of anyone of the claims 8-11, wherein the iteration occurs once every cycle time of a speed control loop for the first rotating shaft.

13. The system of anyone of the claims 8-12, wherein the controller further controls the coupler to couple the first rotating shaft and the second rotating shaft using the coupler in response to a rotating speed of the first rotating shaft equaling the rotating speed of the second rotating shaft.

14. The system of anyone of the claims 8-13, wherein the first rotating shaft is part of a steam turbine system, and the second rotating shaft is part of a gas turbine system.

15. A power plant, comprising:
a steam turbine system including a first rotating shaft;
a gas turbine system including a second rotating shaft;
a coupler for coupling the first rotating shaft to the second rotating shaft;
a sensor for measuring a current relative angle of the first rotating shaft and the second rotating shaft;
an accelerator system for accelerating rotation of the first rotating shaft at a current acceleration rate to a current rotating speed less than a rotating speed of the second rotating shaft; and
the system for achieving the target relative angle between the first rotating shaft to be coupled to the second rotating shaft by the coupler according to anyone of the claims 8-14.
